**Europäisches Patentamt**

**European Patent Office**

**Office européen des brevets**

(11) Numéro de publication : **0 341 105 B1**

# FASCICULE DE BREVET EUROPEEN

(45) Date de publication du fascicule du brevet :
**15.07.92 Bulletin 92/29**

(51) Int. Cl.$^5$ : **B60N 2/02**, B60N 2/10, B60N 2/22

(21) Numéro de dépôt : **89400955.4**

(22) Date de dépôt : **06.04.89**

(54) **Siège à dossier réglable et rabattable.**

(30) Priorité : **22.04.88 FR 8805396**

(43) Date de publication de la demande :
**08.11.89 Bulletin 89/45**

(45) Mention de la délivrance du brevet :
**15.07.92 Bulletin 92/29**

(84) Etats contractants désignés :
**BE DE ES GB IT NL SE**

(56) Documents cités :
**DE-A- 3 504 166**
**FR-A- 2 484 809**
**FR-A- 2 556 946**

(73) Titulaire : **CESA COMPAGNIE EUROPEENNE DE SIEGES POUR AUTOMOBILES**
**20, rue Paul-Vaillant-Couturier**
**F-92300 Levallois-Perret (FR)**

(72) Inventeur : **Fourrey, François**
**34, Rue du Petit Chênois**
**F-25200 Montbeliard (FR)**
Inventeur : **Mauffrey, Jean François**
**8, Rue du Stade**
**F-90400 Andelnans (FR)**

(74) Mandataire : **Mestre, Jean et al**
**c/o CABINET LAVOIX 2, place d'Estienne d'Orves**
**F-75441 Paris Cédex 09 (FR)**

**Description**

Le confort des passagers de même que le gain de place étant des préoccupations constantes des constructeurs de véhicules et notamment de véhicules automobiles, il existe un grand nombre de types de sièges dont le dossier peut être rabattu sur l'assise, et il est de plus en plus désiré que ce dossier puisse également être réglé en inclinaison au cours de son utilisation de façon à assurer un véritable confort à l'utilisateur.

Toutefois, on constate que les dispositifs qui permettent ce réglage en inclinaison sont complexes et pour la plupart mettent en oeuvre un mécanisme auxiliaire d'articulation comprenant de nombreuses pièces et par conséquent coûteux.

Un état de la technique est illustré par le document DE-A-3 504 166. Toutefois, on observera que la solution qui y est décrite comprend outre des axes d'inclinaison et de rabattement distants, un axe intermédiaire avec lequel coopère un verrou de condamnation complexe fait de nombreuses pièces dont aucune ne coopère directement avec l'un de ces axes d'inclinaison ou de rabattement.

La présente invention a pour but de remédier à ces inconvénients en fournissant un siège dont le dossier est à la fois réglable et rabattable et qui, cependant, est réalisé d'une manière particulièrement simple, est d'une fiabilité irréprochable et a un prix de revient peu élevé.

Cette invention a en effet pour objet un siège comportant une armature de dossier et une armature d'assise qui sont reliées entre elles par deux axes espacés, un axe d'inclinaison et un axe de rabattement, du type décrit dans ledit document DE-A-3 504 166 et dont les éléments que divulgue ce dernier et qui sont nécessaires à l'invention, sont indiqués dans le préambule de la revendication principale, la partie caractérisante de celle-ci notamment exposant les particularités distinctives.

Selon un mode de réalisation préféré, l'armature de dossier comporte une lumière crantée emboîtée sur un axe de rabattement solidaire de l'armature d'assise et porte un axe d'inclinaison qui est verrouille sur l'extrémité de l'armature d'assise.

Les moyens de libération sont constitués par un levier de déverrouillage solidaire de l'axe d'inclinaison et comportant un doigt de blocage dans une encoche centrale de l'extrémité de l'armature d'assise, ce doigt étant excentré par rapport à l'axe d'inclinaison.

Grâce à cette disposition le pivotement du levier de déverrouillage dans une direction fait basculer le doigt de blocage dans l'encoche centrale, provoque un soulèvement de l'axe d'inclinaison, ainsi que celui de l'ensemble de l'armature du dossier, et libère ce dernier de l'axe de rabattement, ce qui lui permet de prendre l'inclinaison désirée. Inversement, un pivotement du levier de déverrouillage en sens opposé fait sortir le doigt de blocage de l'encoche centrale et libère l'axe d'inclinaison de sorte que le dossier peut être rabattu sur l'assise. Les armatures constituent ainsi elles-mêmes les moyens de guidage du pivotement du dossier, ce qui évite l'utilisation de dispositifs auxiliaires.

Selon un mode de réalisation préféré, l'armature d'assise et l'armature de dossier comportent chacune un tube en U dont les branches latérales sont repliées vers le haut à leur extrémité, les branches latérales de l'armature du dossier étant en outre aplaties à partir de l'axe d'inclinaison. La fabrication est encore simplifiée tandis que la rigidité du siège est accrue.

La description ci dessous d'un mode de réalisation, donné à titre d'exemple non limitatif et représenté aux dessins annexés, fera d'ailleurs ressortir les avantages et caractéristiques de l'invention. Sur ces dessins :

La figure 1 est une vue schématique de côté d'un siège selon l'invention en position d'utilisation.

La figure 2 est une vue en coupe suivant la ligne 2-2 de la figure 1.

La figure 3 est une vue partielle à plus grande échelle, prise du côté opposé à celui de la figure 1, qui montre la liaison entre le levier de déverrouillage et l'armature d'assise.

La figure 4 est une vue en coupe suivant la ligne 4-4 de la figure 3.

La figure 5 est une vue analogue à la figure 1 du siège en position de réglage de l'inclinaison du dossier.

Les figures 6 et 7 sont des vues analogues à la figure 5 du siège déverrouillé respectivement avant et après le rabattement du dossier sur l'assise.

Le siège objet de l'invention comporte une armature de dossier 1, formée de préférence par un élément replié en U, dont les branches latérales 11 sont aplaties à leur partie inférieure. Ces parties inférieures sont en outre recourbées vers le haut et vers l'avant de sorte que chacune des branches latérales de l'armature 1 est terminée par une portion 2 plate et dirigée vers le haut. Cette portion extrême 2 est percée d'une lumière longitudinale, allongée et légèrement incurvée, lumière crantée 4 dont le bord supérieur comporte des dents arrondies 6 entre deux desquelles est emboîté un axe 8 solidaire d'une armature d'assise 10.

Cette armature d'assise 10 comporte au-dessus d'un socle ou piètement 2 deux bras latéraux 14 qui, vers l'arrière du siège, sont recourbés vers le bas puis vers le haut de façon à avoir une forme voisine de celle de la portion aplatie de la branche latérale 11 adjacente de l'armature du dossier. L'axe 8 traverse ainsi une portion descendante 16 de la branche 14 correspondante.

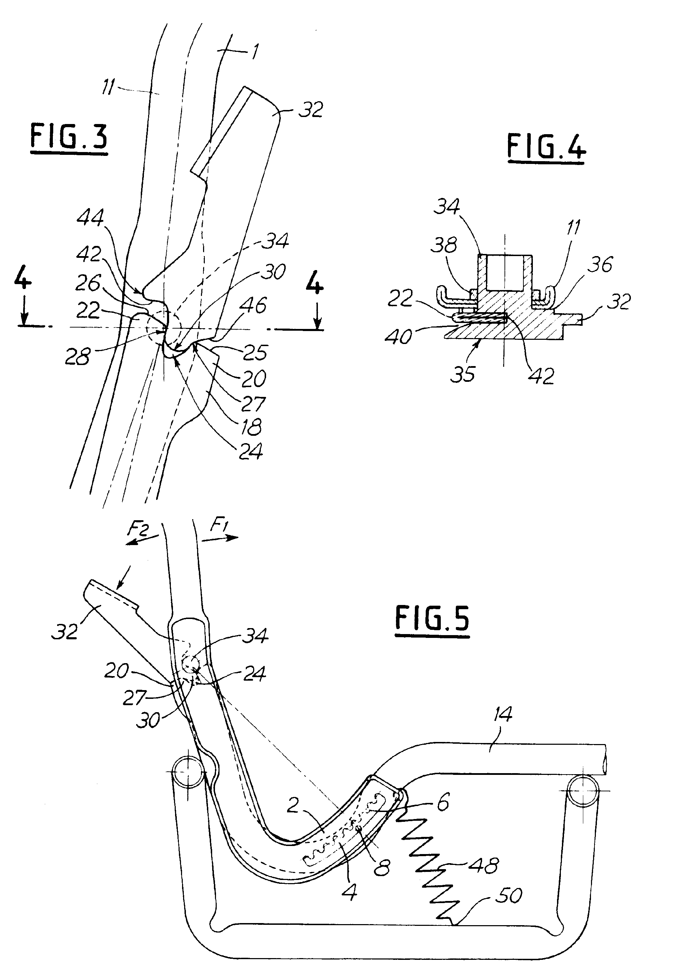

Chacune des branches 14 est en outre terminée par une portion aplatie et légèrement élargie 18 qui forme deux pattes plates, respectivement 20 et 22, séparées par une encoche centrale 24 et terminées par des portées d'appui respectivement 25 et 26. Ces deux portées sont inclinées vers le bas et de préférence la portée avant 26 est légèrement incurvée et est centrée sur l'axe 8. L'encoche centrale 24 est évasée vers l'extérieur et est reliée à chacune des portées 25 et 26 par un angle arrondi respectivement 27 et 28 (Fig.3).

Dans l'encoche centrale 24 est emboîté un doigt plat 30 qui est formé à l'extrémité d'un levier de déverrouillage 32 solidaire d'un axe 34 qui traverse la branche 11 de l'armature 1. En fait le levier 32 comporte au voisinage du doigt 30 un bossage 35 (Fig.4) d'où part l'axe 34 et qui forme une rondelle 36 contre laquelle la branche 11 de l'armature de dossier 1 est bloquée axialement par une rondelle 38 tout en étant libre de tourner par rapport à l'axe 34. Le bossage 35 comporte en outre une encoche latérale 40 dans laquelle vient s'emboîter la patte 22 de l'armature d'assise dans la position d'utilisation du siège. Le fond 42 de l'encoche latérale 40 constitue un prolongement de la face latérale du doigt 30 qui a une forme sensiblement complémentaire de celle du bord de la patte 22 et constitue la face inférieure d'un bec 44 en saillie latérale sur le levier 32. Sur son autre côté, le doigt 30 est prolongé par une face plane 46 inclinée vers le haut c'est-à-dire en direction opposée à celle de la portee 25.

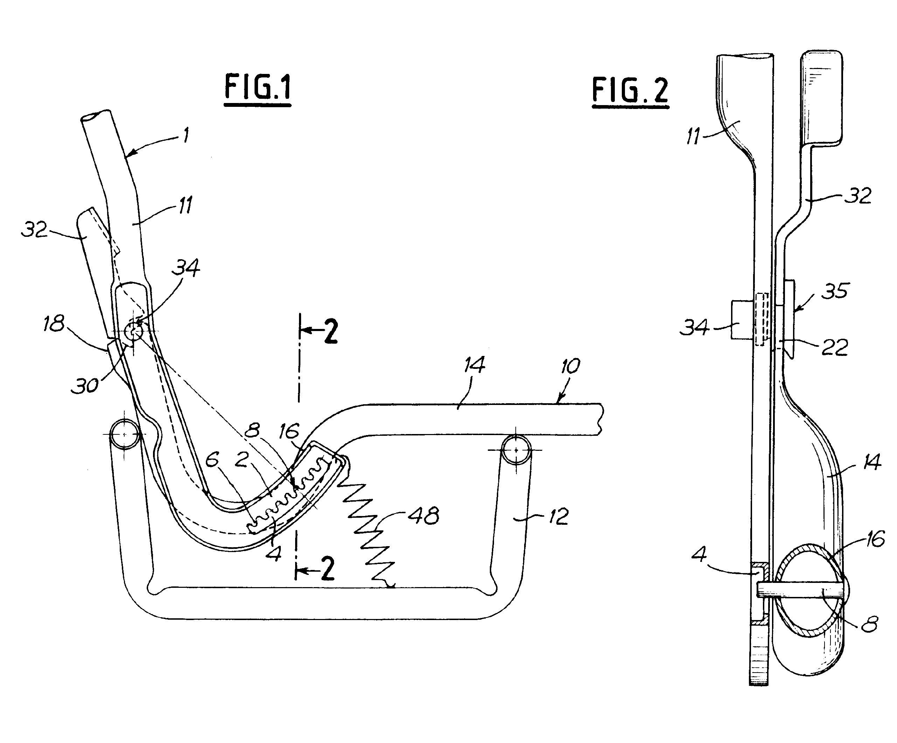

Le doigt plat 30 est ainsi excentré par rapport à l'axe 34 de pivotement du levier de déverrouillage 32. Il est toutefois rigoureusement immobilisé dans l'encoche centrale 24 lorsque ce levier 32 est dans la position relevée représentée sur les figures 1 et 3 du fait de son contact avec les deux pattes 20 et 22, de l'action du poids du dossier 1 qui tend à l'enfoncer dans l'encoche centrale 24 et de l'action du ressort de rappel 48.

Toutefois, lorsque l'utilisateur veut modifier l'inclinaison du dossier 1, il lui suffit de faire pivoter le levier de déverrouillage 32 vers l'arrière du siège comme représenté sur la figure 5. Ce pivotement applique le levier sur l'angle arrondi 27 de la patte 20 et le fait pivoter autour de cet angle de sorte que la face 46 vient prendre appui sur la portée 25 tandis que le doigt 30 bascule dans l'encoche 24 et provoque un soulèvement de l'axe 34 qui s'écarte de sa position initiale, vers l'extérieur et que l'encoche 40 glisse sur la patte 22 mais maintient la liaison entre les deux armatures. Dans son déplacement l'axe 34 entraîne l'armature de dossier 1 et par suite la portion aplatie recourbée vers le haut 2 ainsi que la lumière 4 et tout particulièrement la denture 6. Cette denture se dégage de l'axe 8, de sorte que le dossier n'est plus relié à l'armature d'assise 10 par cet axe 8. L'utilisateur peut alors déplacer la partie supérieur de l'armature 1 vers l'avant ou vers l'arrière, c'est-à-dire selon la flèche F1 ou la flèche F2 de la figure 5, pour modifier l'inclinaison du dossier par rapport à l'assise et notamment déplacer la denture 6 par rapport à l'axe 8 autour de l'axe 34 qui joue le rôle d'axe d'inclinaison.

Lorsque la position désirée a été atteinte, le levier 32 est ramené à sa position initiale c'est-à-dire qu'il pivote en sens inverse autour de l'angle arrondi 27 jusqu'au moment où, l'encoche latérale 40 ayant glissée sur la patte 22 de l'assise, le doigt 30 est à nouveau bloqué dans l'encoche centrale 24. A ce moment, l'axe 34 est redescendu et la denture 6 s'est emboîtée sur l'axe 8 bien que ce dernier ne se trouve pas entre les mêmes dents que précédemment. Ce retour à la position verrouillée est d'ailleurs facilité par l'action d'un ressort 48 qui est monté entre l'extrémité de la portion recourbée 2 de l'armature de dossier 1 et un point fixe 50 du berceau 12 de support de l'assise et qui tend à tout moment à rappeler l'extrémité de l'armature de dossier vers le bas c'est-à-dire la denture 6 dans sa position d'emboîtement sur l'axe 8.

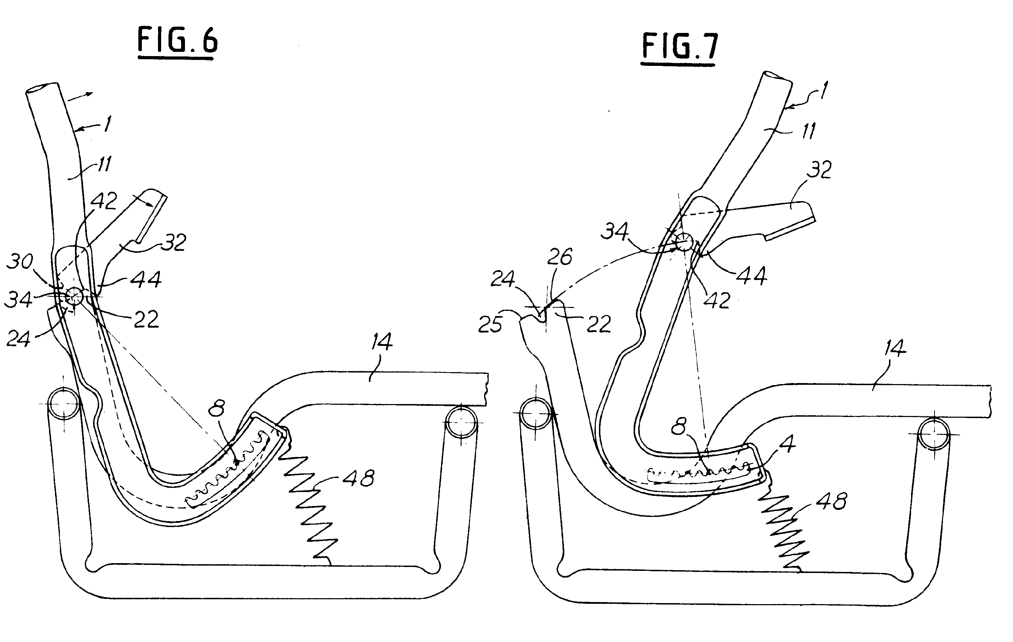

Si, par ailleurs, il est nécessaire d'accroître l'espace disponible derrière le siège et par suite de rabattre le dossier 1, le levier de déverrouillage 32 est repoussé vers l'avant comme le montre la figure 6. Il pivote alors avec l'axe 34 par rapport à l'armature de dossier 1 de telle sorte que sa face profilée 42 vient s'emboîter sur le bord de la patte 22 de l'armature d'assise tandis que le doigt 30 sort de l'encoche centrale 24, ce qui supprime la liaison entre l'assise et le dossier en ce point. Etant donné que le bec 44 vient appuyer sur le bord avant de la patte 22 de l'assise aucun déplacement du dossier vers l'arrière n'est possible. Par contre, un simple effort vers l'avant sur la partie supérieure de l'armature de dossier 1 suffit à faire pivoter cette dernière autour de l'axe 8 qui joue le rôle d'axe de rabattement. Le siège prend alors la position représentée sur la figure 7.

Le retour en position normale du dossier 1 s'effectue par un pivotement inverse de l'armature 1 autour de l'axe 8, la face profilée 42 venant s'emboîter à nouveau sur la portée 26 de la patte 22 grâce notamment au fait que cette portée est centrée sur l'axe 8. Lorsque le bec 44 est à nouveau en contact avec la patte 22, le levier 32 peut être remonté de façon à bloquer à nouveau le doigt 30 dans l'encoche centrale 24. Le siège se retrouve en position verrouillé.

Cette manoeuvre, de même que la précédente, s'effectue donc de manière extrêmement simple sans l'intervention de mécanisme extérieure particulier, uniquement grâce à la forme des armatures d'assise et de dossier. La commande de l'inclinaison du dossier de même que celle de son rabattement ont ainsi un encombrement particulièrement faible bien qu'elles disposent d'une fiabilité inaltérable, de sorte que le siège obtenu est à la fois extrêmement résistant, particulièrement confortable et peu coûteux.

Bien entendu, les branches latérales de l'armature de dossier comme celles de l'armature d'assise sont formées de manière identique, un axe de rabattement 8 et une lumière 4 étant prévus sur chacun des côtés du siège. De même un axe d'inclinaison 34, un doigt de blocage 30 et un bossage 35 sont montés sur chacune des branches latérales 11 de l'armature de dossier 1 de façon à coopérer avec deux encoches centrales 24 identiques de l'armature d'assise. Toutefois il est généralement preférable de n'utiliser qu'un seul levier de commande de déverrouillage 32 solidaire de l'un des bossages 35 et de réunir les deux axes 34 l'un à l'autre par une tige transversale. Les deux côtés du siège sont ainsi déplacés simultanément et pivotent ensemble autour de l'axe d'inclinaison 34 ou de l'axe de rabattement 8.

**Revendications**

1. Siège de véhicule à dossier réglable et rabattable comportant une armature de dossier (1) et une armature d'assise (10) qui sont reliées entre elles notamment par un axe d'inclinaison (34) et un axe de rabattement (8) qui sont espacés l'un de l'autre, et des moyens de libération (32, 30) pour permettre le pivotement du dossier (1) relativement à l'assise (10) caractérisé en ce que ces axes (34; 8) d'une part sont tous deux directement solidaires chacun respectivement de l'une de ces armatures (1; 10) et d'autre part sont tous deux directement verrouillés chacun respectivement sur l'autre de ces armatures (10; 1) et en ce que lesdits moyens de libération (32, 30) sont mobiles dans deux sens opposés et permettent de déverrouiller à volonté l'un ou l'autre de ces axes (34, 8) pour permettre ledit pivotement du dossier (1) relativement à l'assise (10) autour de l'autre de ces axes (34, 8) selon le sens de leur déplacement.

2. Siège suivant la revendication 1, caractérisé en ce que l'armature de dossier (1) comporte une lumière (4) munie d'une denture (6) emboîtée sur un axe de rabattement (8) solidaire de l'armature d'assise et porte un axe d'inclinaison (34) verrouillé sur l'extrémité (18) de l'armature d'assise.

3. Siège suivant l'une des revendications 1 et 2, caractérisé en ce que les moyens (32) de libération des axes comportent un levier de déverrouillage qui est solidaire de l'axe d'inclinaison (34) et comporte un doigt (30) de blocage dans une encoche centrale (24) de l'extrémité (18) de l'armature d'assise, ce doigt étant excentré par rapport à l'axe d'inclinaison (34).

4. Siège suivant la revendication 3, caractérisé en ce que le doigt de blocage (30) est susceptible de pivoter dans l'encoche centrale (24) autour d'un bord de cette encoche en entraînant l'axe d'inclinaison (34) et en libérant la denture (6) de l'axe de rabattement (8).

5. Siège suivant l'une des revendications 3 et 4, caractérisé en ce que le levier de déverrouillage (32) et le doigt (30) de blocage tournent avec l'axe d'inclinaison (34) entre la position de blocage du doigt (30) dans l'encoche centrale (24) et une position de dégagement de ce doigt et de libération de l'armature de dossier (1) par rapport à l'extrémité de l'armature d'assise (10) en vue de son rabattement.

6. Siège suivant l'une des revendications 2 à 5, caractérisé en ce que la lumière (4) de l'armature du dossier (1) est incurvée et centrée sur l'axe d'inclinaison (34).

7. Siège suivant l'une des revendications précédentes, caractérisé en ce que l'armature de dossier (1) comporte des branches latérales (11) qui sont recourbées à leur partie inférieure (2) vers l'avant et vers le haut, la lumière crantée (4) étant ménagée dans cette partie recourbée.

8. Siège suivant l'une des revendications précédentes, caractérisé en ce que l'armature d'assise (10) comporte des branches latérales (14) qui sont recourbées vers le bas puis vers le haut à leur extrémité arrière et qui sont terminées par une portion aplatie (18) formant de part et d'autre d'une encoche centrale (24) deux pattes plates respectivement (20,22).

9. Siège suivant l'une des revendications précédentes, caractérisé en ce que les armatures de dossier (1) et d'assise (10) sont formées par des tubes aplatis à leur extrémité, les branches latérales (11) de l'armature de dossier (1) étant aplaties entre les axes (34;8) de liaison à l'armature de l'assise (10).

10. Siège suivant l'une des revendications précédentes, caractérisé en ce qu'il comporte un ressort de rappel (48) entre l'extrémité de l'armature de dossier (1) et un point fixe du sol (50).

11. Siège suivant l'une des revendications 3 à 10, caractérisé en ce que le levier de déverrouillage (32) comporte, de part et d'autre du doigt (30) de blocage des faces profilées (42,46) de forme sensiblement complémentaire de celle des pattes (20,22) de l'extrémité de l'armature d'assise (10).

12. Siège suivant l'une des revendications 3 à 11, caractérisé en ce que le levier de déverrouillage (32) comporte un bossage (35) d'où part l'axe d'inclinaison (34) traversant l'armature de dossier (1) et qui comporte une encoche latérale (40) de réception de l'extrémité (18) de l'armature d'assise (10).

13. Siège suivant l'une des revendications précédentes, caractérisé en ce que l'armature de dossier (1) et l'armature d'assise (10) comportent deux branches latérales (11,14) formées de manière identique, les axes d'inclinaison (34) des deux côtés étant rendus solidaires par une tige transversale et les moyens de libération comportant un seul levier de déverrouillage (32) solidaire de l'axe d'inclinaison (34).

**Patentansprüche**

1. Sitz mit verstellbarer und umlegbarer Rückenlehne, mit einem Lehnenbeschlag (1) und einem Sitzbeschlag (10), die miteinander verbunden sind, insbesondere durch eine Neigungs-Achse (34) und eine Umleg-Achse (8), die zueinander beabstandet sind, und mit Freigabemitteln (32,30), die das Schwenken der Lehne (1) in bezug auf den Sitz (10) gestatten, dadurch gekennzeichnet, daß die Achsen (34;8) einerseits beide direkt an je einem der Beschläge (1;10) angeordnet und andererseits beide direkt mit dem jeweiligen anderen der Beschläge (10;1) verriegelt sind und daß die Freigabemittel (32,30) in zwei entgegengesetzten Richtungen bewegbar sind und es gestatten, je nach der Richtung ihrer Bewegung wahlweise die eine oder die andere der Achsen (34,8) zu entriegeln, um die Schwenkbewegung der Rückenlehne (1) relativ zu dem Sitz (2) um die andere der Achsen (34,8) zu ermöglichen.

2. Sitz nach Anspruch 1, dadurch gekennzeichnet, daß der Lehnenbeschlag (1) eine Öffnung (4) aufweist, die mit einer Zahnung (6) versehen ist, die mit einer Umleg-Achse (8) an dem Sitzbeschlag in Eingriff steht und daß der Lehnenbeschlag eine Neigungs-Achse (34) trägt, die mit dem Ende (18) des Sitzbeschlages verriegelt ist.

3. Sitz nach Anspruch 1 oder 2, dadurch gekennzeichnet, daß die Freigabemittel (32) für die Achsen einen Entriegelungshebel aufweisen, der an der Neigungs-Achse (34) angeordnet ist und einen Sperrfinger (30) aufweist, der exzentrisch in bezug auf die Neigungs-Achse (34) angeordnet ist und in einer zentralen Kerbe (24) am Ende (18) des Sitzbeschlages liegt.

4. Sitz nach Anspruch 3, dadurch gekennzeichnet, daß der Sperrfinger (30) in der zentralen Kerbe (24) um einen Rand derselben schwenkbar ist und dabei die Neigungs-Achse (34) mitnimmt und die Zahnung (6) aus dem Eingriff mit der Umleg-Achse (8) befreit.

5. Sitz nach Anspruch 3 oder 4, dadurch gekennzeichnet, daß der Entriegelungshebel (32) und der Sperrfinger (30) mit der Neigungs-Achse (34) zwischen einer Sperrstellung des Fingers (30) in der zentralen Kerbe (24) und einer Freigabestellung des Fingers drehbar sind, in der der Lehnenbeschlag (1) im Hinblick auf das Umlegen von dem Ende des Sitzbeschlages (10) entriegelt ist.

6. Sitz nach einem der Ansprüche 2 bis 5, dadurch gekennzeichnet, daß die Öffnung (4) des Lehnenbeschlages (1) gekrümmt und auf die Neigungs-Achse (34) zentriert ist.

7. Sitz nach einem der vorstehenden Ansprüche, dadurch gekennzeichnet, daß der Lehnenbeschlag (1) seitliche Schenkel (11) aufweist, die in ihrem unteren Teil (2) nach vorn und nach oben gekrümmt sind, und daß die gezahnte Öffnung (4) in diesem gekrümmten Abschnitt ausgebildet ist.

8. Sitz nach einem der vorstehenden Ansprüche, dadurch gekennzeichnet, daß der Sitzbeschlag (10) seitliche Arme (14) aufweist, die an ihrem hinteren Ende nach unten und dann nach oben gekrümmt sind und die in einem abgeflachten Abschnitt (18) enden, der zwei flache Klauen (20,22) beiderseits der zentralen Kerbe (24) bildet.

9. Sitz nach einem der vorstehenden Ansprüche, dadurch gekennzeichnet, daß die Beschläge der Rückenlehne (1) und des Sitzes (10) durch an ihrem Ende abgeflachte Rohre gebildet sind, wobei die seitlichen Schenkel (11) des Lehnenbeschlages (1) zwischen den Achsen (34,8) zur Verbindung mit dem Sitzbeschlag (10) abgeflacht sind.

10. Sitz nach einem der vorstehenden Ansprüche, dadurch gekennzeichnet, daß er eine Rückholfeder (48) zwischen dem Ende des Lehnenbeschlages (1) und einem bodenfesten Punkt (50) aufweist.

11. Sitz nach einem der Ansprüche 3 bis 10, dadurch gekennzeichnet, daß der Entriegelungshebel (32) beiderseits des Sperrfingers (30) mit Kurvenflächen (42,46) versehen ist, deren Form im wesentlichen zu derjenigen der Klauen (20,22) des Endes des Sitzbeschlages (10) komplementär ist.

12. Sitz nach einem der Ansprüche 3 bis 11, dadurch gekennzeichnet, daß der Entriegelungshebel (32) eine Verdickung (35) aufweist, von der die den Lehnenbeschlag (1) durchquerende Neigungs-Achse (34) ausgeht und die eine seitliche Kerbe (40) zur Aufnahme des Endes (18) des Sitzbeschlages (10) aufweist.

13. Sitz nach einem der vorstehenden Ansprüche, dadurch gekennzeichnet, daß der Lehnenbeschlag (1) und der Sitzbeschlag (10) zwei gleich gestaltete seitliche Arme (11, 14) aufweisen, daß die Neigungs-Achsen (34) auf beiden Seiten durch eine quer verlaufende Welle miteinander verbunden sind und daß die Freigabemittel einen einzigen Entriegelungshebel (32) in Verbindung mit der Neigungs-Achse (34) aufweisen.

**Claims**

1. A vehicle seat having an adjustable fold-down backrest, comprising a back frame (1) and a seat frame (10) connected to each other by, in particular, a tilting axle (34) and a folding-down axle (8) which are spaced apart, and releasing means (32,30) enabling the backrest (1) to be pivoted relative to the seat (10), characterised in that, on the one hand, these axles (34; 8) are each directly integrally secured to one of the frames (1;10) respectively and, on the other hand, they are each directly bolted to the other of the frames (10; 1) respectively and the releasing means (32,30) are movable in two opposite directions and enable one or other of the axles (34,8) to be released as desired in order to allow the backrest (1) to pivot relative to the seat (10) about the other axle (34,8) in the direction of their movement.

2. A seat according to Claim 1, characterised in that the back frame (1) has a slot (4) equipped with teeth (6) engaging on a folding-down axle (8) fixed to the seat frame and carries a tilting axle (34) bolted to the end (18) of the seat frame.

3. A seat according to one of Claims 1 and 2, characterised in that the means (32) for releasing the axles comprise a releasing lever which is integral with the tilting axle (34) and which has a pawl (30) for engaging in a central notch (24) in the end (18) of the seat frame, this pawl being offset relative to the tilting axle (34).

4. A seat according to Claim 3, characterised in that the engaging pawl (30) is capable of pivoting in the central notch (24) about one edge of this notch, taking with it the tilting axle (34) and disengaging the teeth (6) from the folding-down axle (8).

5. A seat according to one of Claims 3 and 4, characterised in that the releasing lever (32) and the engaging pawl (30) rotate, together with the tilting axle (34), between the position of engagement of the pawl (30) in the central notch (24) and a position of disengagement of this pawl and of the back frame (1) relative to the end of the seat frame (10) for the purpose of folding it down.

6. A seat according to one of Claims 2 to 5, characterised in that the slot (4) in the back frame (1) is curved and centred on the tilting axle (34).

7. A seat according to one the preceding claims, characterised in that the back frame (1) comprises lateral limbs (11) which curve forwards and upwards in their lower part (2), the serrated slot (4) being formed in this curved part.

8. A seat according to one of the preceding claims, characterised in that the seat frame (10) comprises lateral limbs (14) which curve downwards and then upwards at their rear end and which terminate in a flattened position (18) forming two flat lugs (20,22) on either side of a central notch (24).

9. A seat according to one of the preceding claims, characterised in that the back frame (1) and seat frame (10) are formed by tubes flattened at their end, the lateral limbs (11) of the back frame (1) being flattened between the axles (34,8) connecting it to the seat frame (10).

10. A seat according to one of the preceding claims, characterised in that it has a return spring (48) between the end of the back frame (1) and a fixed point (50) of the base.

11. A seat according to one of Claims 3 to 10, characterised in that the releasing lever (32) has, on either side of the engaging pawl (30), profiled faces (42,46) of a form substantially matching that of the lugs (20,22) at the end of the seat frame (10).

12. A seat according to one of Claims 3 to 11, characterised in that the releasing lever (32) has a boss (35), from which the tilting axle (34) starts which passes through the back frame (1), and which has a lateral notch (40) for receiving the end (18) of the seat frame (10).

13. A seat according to one of the preceding claims, characterised in that the back frame (1) and the seat frame 10) comprise two lateral limbs (11,14) of identical construction, the tilting axles (34) of the two sides being connected to one another by means of a transverse rod, and the release means comprising a single releasing lever (32) integral with the tilting axle (34).

# FIG.1

# FIG.2

EP 0 341 105 B1

FIG.3

FIG.4

FIG.5

# FIG.6

# FIG.7

EP 0 341 105 B1